# EUROPÄISCHE PATENTANMELDUNG

(11) **EP 0 702 314 A2**
(43) Veröffentlichungstag der Anmeldung: **20.03.1996**
(21) Anmeldenummer: 95113968.2
(22) Anmeldetag: 06.09.1995
(51) Int. Cl.: G06K 7/015

(54) **Vorrichtung zum Lesen und/oder Beschreiben von mindestens einen optischen und einen Chip-Speicherbereich aufweisenden Datenträgerkarten**

(30) Priorität: 19.09.1994 DE 4433260
(71) Anmelder: BAYER AG, D-51368 Leverkusen (DE)
(72) Erfinder: Artz, Joachim, D-51371 Leverkusen (DE); Wettlaufer, Hans-Gerd, D-51377 Leverkusen (DE); Hartmann, Georg, Dr., D-51061 Köln (DE); Weikert, Gunnar, Dr., D-40589 Düsseldorf (DE)

(57) **Zusammenfassung**

Es wird eine Vorrichtung zum Lesen und/oder Beschreiben von von mindestens einen optischen und mindestens einen Chip-Speicherbereich aufweisenden Datenträgerkarten beschrieben, wobei die Vorrichtung einen Kartenträger zur Aufnahme und Fixierung der Datenträgerkarte und einen optischen Schreib/Lese-Kopf aufweist, wobei Kartenträger und Schreib/Lese-Kopf in Ebenen parallel zur Auflagefläche des Kartenträgers für die Karte in verschiedenen Richtungen hin und her bewegbar sind, und in der Auflagefläche des Kartenträgers für die Karte eine Ausnehmung vorgesehen ist, in die der Chipkontakt eingelassen ist.

## Beschreibung

Optische Speicherkarten im Kreditkartenformat, die mittels Laserstrahlen beschrieben und gelesen werden können ("WORM" = write once read many), haben aufgrund der technischen Entwicklung in den vergangenen Jahren Speicherkapazitäten von mehreren Megabyte, insbesondere 4 bis 6 Megabyte, erzielt. Eine entsprechende Entwicklung haben die Schreib/Lese-Geräte genommen. Im Gegensatz zur magnetischen Speicherung auf Disketten sind die optisch gespeicherten Daten unempfindlich gegen mechanische und elektromagnetische Einflüsse. Sie sind also geeignet, z.B. in Geldbörsen an der Person mitgeführt zu werden.

Chipkarten im Kreditkartenformat enthalten einen oder mehrere elektronische Speicher- und/oder Prozessorchips, die in die Karte eingelassen sind, wobei auf der Oberfläche der Karte flächige metallische Kontakte angeordnet sind, auf die entsprechend angeordnete Kontaktstifte des Schreib/Lese-Kopfes aufgedrückt werden. Chipkarten finden insbesondere Anwendung als Guthabenkarten (Debitkarten) zur Bezahlung von Telefongesprächen, Eintrittskarten oder Parkgebühren. Als Prozessorkarten ausgestaltet, können diese einen Lesespeicher (ROM) mit 1 bis 10 Kilobyte Speicherkapazität für die Betriebs- bzw. Anwendersoftware und bis zu 2 Megabyte Speicherkapazität als Arbeitsspeicher aufweisen. Insbesondere mit Prozessorchip ausgestattete Karten eröffnen vielfältige Möglichkeiten im Bereich der elektronischen Verschlüsselung (Kryptographie).

Es wurde auch bereits vorgeschlagen, Speicherkarten sowohl mit einem optischen Speicherbereich als auch mit einem Chipspeicherbereich auszustatten (sogenannte Hybridkarten), siehe z.B. US-A 5 185 798.

Der Einsatz der Hybridkarte verlangt getrennte Schreib/Lese-Geräte für den optischen Speicherbereich einerseits und den Chip-Speicherbereich andererseits, da beide Speicherbereiche grundsätzlich verschiedene Schreib/Lese-Techniken erfordern. Im Falle der optischen Karte wird die optische Speicherfläche von einem Laser-Schreib/Lese-Kopf in zwei Dimensionen abgetastet, wobei im allgemeinen die Karte auf einem Kartenträger in einer Dimension hin und her bewegt wird (Zeilenabtastung) und der Schreib/Lese-Kopf in einer anderen Dimension über der Karte hin und her bewegt wird (Spaltenabtastung). Das Lesen und Beschreiben des Chip erfolgt dagegen über Ruhekontakte.

Im Interesse eines effektiven Einsatzes von Hybridkarten wäre es wünschenswert, sowohl den optischen als auch den Chip-Speicherbereich jeweils gleichzeitig zugreifbar zu haben. Z.B. ist es für viele Anwendungen zweckmäßig, in dem schnell zugreifbaren Chip-Speicherbereich das Inhaltsverzeichnis (Index) für die im optischen Speicherbereich gespeicherten Daten mit vergleichsweise niedriger Zugriffsgeschwindigkeit zu speichern. Insbesondere beim Beschreiben des optischen Speicherbereiches wäre ein Zugriff auf den Chip zur Identifizierung eines freien Speicherplatzes und nach Beschreiben die Abspeicherung der neuen Speicheradresse im Chip möglich, ohne die Karte von einem Lesegerät in das andere zu bewegen.

Ferner werden die kryptographischen Möglichkeiten einer Hybridkarte dadurch erheblich erweitert, daß beim Lesen und Beschreiben des optischen Speicherbereiches der Ver- und Entschlüsselungsprozessor des Chip simultan zur Verfügung steht.

Aufgabe der vorliegenden Erfindung ist es, ein Schreib/Lese-Gerät zur Verfügung zu stellen, das es erlaubt, auf die Daten beider Speicherbereiche einer Hybridkarte simultan zuzugreifen bzw. die Speicherbereiche simultan zu beschreiben.

Gegenstand der vorliegenden Erfindung ist eine Vorrichtung zum Lesen und/oder Beschreiben von mindestens einen optischen und mindestens einen Chip-Speicherbereich aufweisenden Datenträgerkarten, wobei die Vorrichtung einen Kartenträger zur Aufnahme und Fixierung der Datenträgerkarte enthält, der Kartenträger in einer ersten Richtung in der Kartenträgerebene über eine Länge, die mindestens der Längsabmessung des optischen Speicherbereiches der Karte entspricht, hin und her bewegbar ist, einen optischen Schreib/Lese-Kopf, der in einer zweiten Richtung oberhalb der Kartenebene und zu dieser parallel über eine Länge, die mindestens die Breite des optischen Speicherbereiches der Karte überdeckt, hin und her bewegbar ist, wobei ferner die Auflagefläche des Kartenträgers für die Karte eine Ausnehmung aufweist, in die der Chipkontakt eingelassen ist.

Die Erfindung wird nachfolgend anhand der Figuren 1 bis 4 näher erläutert:
- Fig. 1: Zeigt Vorder- und Rückseite einer erfindungsgemäß einsetzbaren Hybridkarte.
- Fig. 2: zeigt eine alternative Rückseite der erfindungsgemäß einsetzbaren Karte.
- Fig. 3: zeigt die erfindungsgemäße Schreib/Lese-Vorrichtung.
- Fig. 4: zeigt eine datenverarbeitungstechnische Umgebung des erfindungsgemäßen Schreib/Lese-Gerätes.

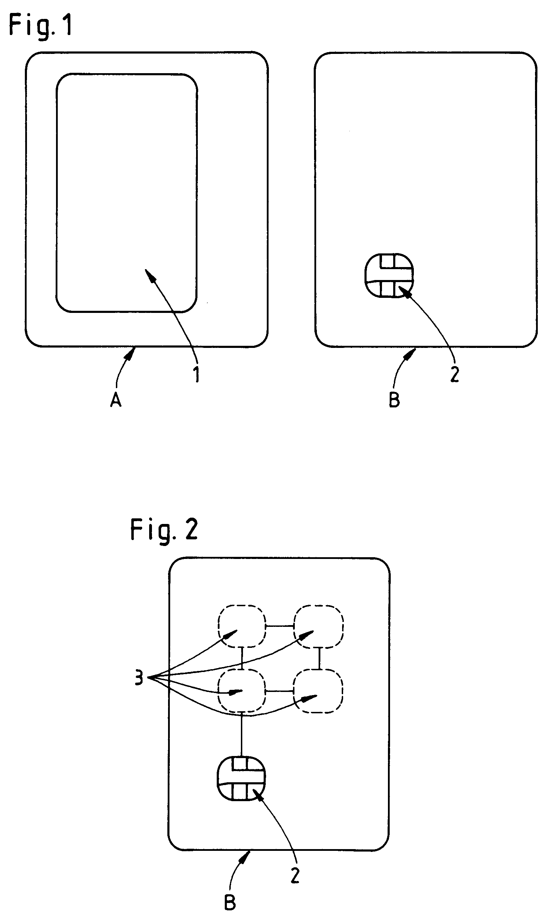

Fig. 1 zeigt die Vorderseite A mit dem optischen Speicherbereich 1 einer erfindungsgemäß einsetzbaren Hybridkarte. Die Rückseite B der Karte enthält den Chip, der innerhalb der dargestellten Kontaktfläche 2 beispielhaft 6 Kontakte aufweist.

Fig. 2 zeigt die Rückseite B einer alternativen Hybridkarte, die eine Vielzahl von zusätzlichen Chips 3 aufweist, die über eine gemeinsame Kontaktfläche 2 angesteuert werden können.

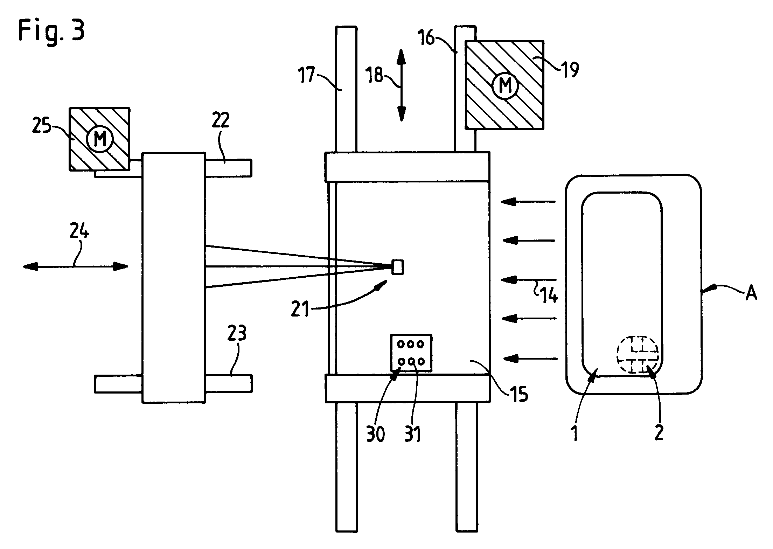

Fig. 3 zeigt die mit dem optischen Speicherbereich 1 nach oben zeigende Hybridkarte A mit der unterhalb der Karte liegenden Kontaktfläche 2 für den Chip. Das Schreib/Lese-Gerät weist einen Kartenträger 15 auf, in dem die Karte in Richtung der Pfeile 14 geschoben wird. Der Kartenträger 15 ist auf Gleitschienen 16, 17 mit Hilfe einer Antriebsvorrichtung 19 in Richtung des Doppelpfeils 18 hin und her bewegbar. Der optische Schreib/Lese-Kopf 21 ist auf den Gleitschienen 22, 23 mit Hilfe der Antriebsvorrichtung 25 in Richtung des Doppelpfeiles 24 hin und her bewegbar, so daß die kombinierte Bewegung entlang den Doppelpfeilen 18 und 24 die Abtastung des optischen Speicherbereiches 2 der in den Träger 15 eingeschobenen Speicherkarte A erlaubt. Insoweit handelt es sich um kommerziell verfügbare Schreib/Lese-Geräte für optische Speicherkarten, wie sie unter den Bezeichnungen Conlux LC-304, Olympus CS 2000 oder Canon RW-20 kommerziell verfügbar sind.

Erfindungsgemäß ist nun in den Kartentisch 15 der Kontakt 30 mit Kontaktstiften 31 in den Kartenträger 15 derart eingelassen, daß nach dem Einschieben der Hybridkarte A in den Kartentisch 15 die Kontaktstifte 31 mit den entsprechenden Bereichen der Kontaktfläche 2 zur Deckung kommen. Die Signalübertragung von Kontakt 30 zu den nachgeschalteten Datenverarbeitungseinrichtungen kann über ein frei bewegliches Flachbandkabel erfolgen.

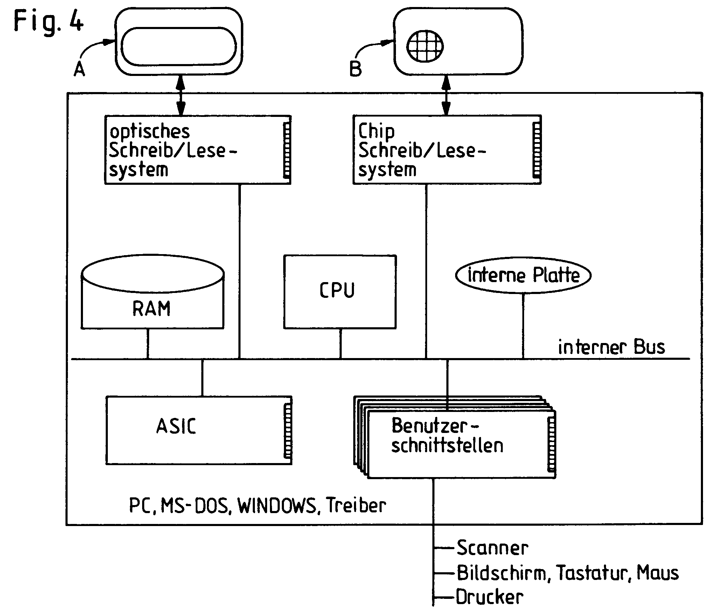

Fig. 4 zeigt die Vorderseite A und die Rückseite B einer Hybridkarte in einer datenverarbeitungstechnischen Umgebung, z.B. einer PC-Umgebung.

## Patentansprüche

1. Vorrichtung zum Lesen und/oder Beschreiben von mindestens einen optischen und mindestens einen Chip-Speicherbereich aufweisenden Datenträgerkarten, enthaltend einen Kartenträger zur Aufnahme und Fixierung der Datenträgerkarte, wobei der Kartenträger in einer ersten Richtung in der Kartenträgerebene über eine Länge die mindestens der Längsabmessung des optischen Speicherbereiches der Karte entspricht, hin und her bewegbar ist, einen optischen Schreib/Lese-Kopf, der in einer zweiten Richtung oberhalb der Kartenebene und zu dieser parallel über eine Länge, die mindestens die Breite des optischen Speicherbereiches der Karte überdeckt, hin und her bewegbar ist, wobei ferner die Auflagefläche des Kartenträgers für die Karte eine Ausnehmung aufweist, in die der Chipkontakt eingelassen ist.
